# FASCICULE DE BREVET EUROPEEN

(11) **EP 0 506 567 B1**
(45) Date de publication et mention de la délivrance du brevet: **04.06.1997**
(21) Numéro de dépôt: 92400841.0
(22) Date de dépôt: 26.03.1992
(51) Int. Cl.: H04J 14/02

(54) **Dispositif rapidement réconfigurable de multiplexage en longueur d'onde**
Schnell wiederkonfigurienbare lichtwellenlänge Multiplexer
Quickly reconfigurable wavelength division muliplexer

(30) Priorité: 28.03.1991 FR 9103780
(43) Date de publication de la demande: 30.09.1992
(73) Titulaire: FRANCE TELECOM, 75015 Paris (FR)
(72) Inventeur: Guignard, Philipe, F-22560 Pleumeur Bodou (FR); Sorel, Yvon, F-22700 Louannec (FR); Kerdiles, Jean-François, F-22560 Pleumeur Bodou (FR)
(74) Mandataire: Signore, Robert

(56) Documents cités:
- US-A- 4 359 773
- COHERENT OPTICAL COMMUNICATIONS AND PHOTONIC SWITCHING 19 Septembre 1989, TIRENNIA (IT) pages 237 - 248; DAVID SMITH: 'Combined spectral & spatial multiplexing schemes for switching networks'
- IEEE JOURNAL OF QUANTUM ELECTRONICS vol. 22, no. 6, 6 Juin 1986, pages 911 - 918; RICHARD FORBER ET AL.: 'Symmetric directional coupler switches'
- PATENT ABSTRACTS OF JAPAN vol. 01, no. 27 (E-378)4 Février 1986 & JP-A-60 185 438

## Description

La présente invention a pour objet un dispositif rapidement reconfigurable de multiplexage en longueur d'onde. Elle s'applique notamment à la transmission de données dans un réseau optique, à la commutation optique dans laquelle on associe une longueur d'onde à des données, pour les aiguiller ensuite par filtrage (à l'aide d'un organe de commutation ATM par exemple, où ATM : Asynchronous Transfert Mode, terminologie anglosaxonne usuelle pour mode de transfert asynchrone), aux mémoires optiques : il est alors possible de stocker, sur un même support physique, des données à différentes longueurs d'onde.

Le présent dispositif permet d'attribuer une longueur d'onde particulière à des données à mémoriser.

Dans les réseaux optiques, le multiplexage optique permet d'augmenter la capacité de transmission d'une liaison par fibre optique en superposant sur la même fibre optique plusieurs canaux utilisant chacun une longueur d'onde particulière.

On sait que les dispositifs en volume de multiplexage optique tels qu'un coupleur à fibre, un multiplexeur à réseau ou un multiplexeur à filtres interférentiels sont figés une fois pour toutes dans leur configuration initiale ou ne sont reconfigurables que trop lentement par rapport aux besoins pour la transmission d'informations. Autrement dit, la répartition des différentes longueurs d'onde est difficilement ou lentement modifiable.

Dans certains réseaux connus, des diodes lasers sont modulées de manière à émettre un signal lumineux modulé. Dans ce cas, l'envoi d'une même information sur tout ou partie des canaux est problématique : soit il faut réserver un canal commun à tous les récepteurs, ce qui implique une plus grande complexité des équipements, soit tous les faisceaux de longueur d'onde différente doivent être modulés de manière identique, ce qui implique une répétition du même message autant de fois qu'il y a de longueurs d'onde.

On connaît aussi
par US-A-4,359,773 une source-laser intégrée à commande de seuil automatique et commutation automatique et
par l'Article de David SMITH publié dans COHERENT OPTICAL COMMUNICATIONS AND PHOTONIC SWITCHING, 19 septembre 1989, TIRENNIA (IT), pages 237 à 248 un commutateur de réseau optique multidimensionnel. Ce réseau comprend un bus de référence qui transporte des fréquences de référence numérotées de 1 à M. Chaque canal individuel de données électriques est appliqué à un émetteur séparé qui consiste en un modulateur électro-optique alimenté par une fréquence choisie parmi celles du bus de référence. La sélection de la fréquence de référence est accomplie par un commutateur spatial optique de type "M vers 1".

La présente invention concerne un dispositif qui permet la transmission d'informations sur un ou plusieurs canaux d'une liaison à fibre optique et possédant une grande vitesse de commutation d'une Longueur d'onde à l'autre pour permettre une communication en mode "paquet". Dans ce mode de communication, les informations à transmettre sont découpées en paquets de durée déterminée ; les paquets sont émis séquentiellement sur le réseau, à une longueur d'onde dépendant du destinataire du paquet.

Le dispositif selon l'invention permet en outre une diffusion totale ou sélective des informations, c'est-à-dire l'envoi simultané du même message sur tous les canaux ou à tout sous-ensemble sélectionné à volonté de canaux.

Plus précisément, la présente invention concerne un dispositif de multiplexage en longueur d'onde conformément à la revendication 1.

Le circuit de commande des coupleurs, permettant de sélectionner la configuration choisie par l'utilisateur, peut être constitué par un processeur programmé de façon adéquate ou bien, avantageusement, par un circuit logique de commande.

Dans une réalisation particulière, le dispositif comprend aussi un circuit de traitement de données relié aux moyens de modulation et apte à délivrer un signal de commande de modulation.

Les sources lumineuses peuvent être des sources lasers.

Le dispositif peut comprendre en outre un organe de commande qui est apte à modifier la puissance lumineuse de chaque source lumineuse. De préférence, cet organe est commandé par le circuit de commande de manière à assurer une puissance lumineuse identique pour chaque longueur d'onde sélectionnée, à la sortie du dispositif.

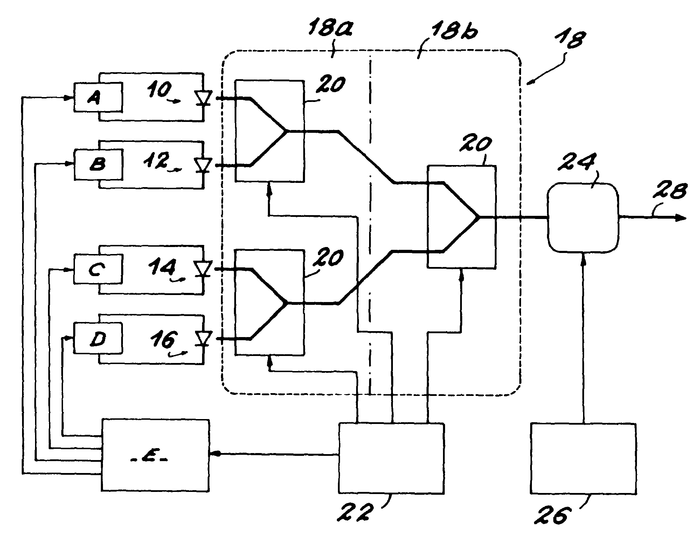

Les caractéristiques et avantages de l'invention apparaîtront mieux après la description qui suit et qui est donnée à titre explicatif et nullement limitatif. Cette description se réfère à une figure unique représentant schématiquement un dispositif de multiplexage conforme à l'invention.

En référence à la figure unique, on décrit maintenant un dispositif de multiplexage conforme à l'invention. Dans l'exemple de réalisation représenté, quatre diodes lasers 10, 12, 14, 16 délivrent, chacune, un faisceau lumineux continu et de longueur d'onde particulière sur une entrée d'une matrice de commutation 18. On comprend que le nombre N de longueurs d'onde disponibles n'est ici limité à quatre que dans un souci de clarté de description. Ces longueurs d'ondes sont toutes différentes les unes des autres.

La matrice de commutation 18 est du type N vers 1 ; c'est-à-dire qu'elle comporte N entrées (N est égal à 4 dans l'exemple représenté) et une sortie. La matrice 18 comporte plusieurs étages 18a, 18b successifs de coupleurs optiques 20 commandables par application de tensions de commande. Dans l'exemple représenté, chaque coupleur 20 possède deux entrées et une sortie. Ce peut être par exemple des coupleurs du type du modulateur d'intensité au LiNbO₃ commercialisé par la Société THOMSON SINTRA sous la référence "MOH 902". De tels coupleurs 20 présentent des temps de commutation très faibles, de l'ordre de 100 picosecondes. Les coupleurs 20 des étages successifs sont reliés entre eux en une structure arborescente.

Dans l'exemple représenté, étant donné le nombre de diodes lasers égal à quatre, la matrice de commutation ne possède que deux étages 18a, 18b. On comprend que la matrice de commutation possède autant d'étages que nécessaire pour présenter N entrées et une sortie. Le premier étage 18a comporte un nombre de coupleurs 20 suffisant pour établir une connexion d'entrée avec chaque diode laser. Dans l'exemple représenté, l'étage 18a comprend deux coupleurs 20, donc quatre entrées et présente deux sorties.

L'étage suivant 18b ne possède qu'un coupleur 20 relié par deux entrées aux deux sorties de l'étage précédent 18a. Il ne présente qu'une sortie.

Un circuit de commande 22 délivrant des tensions de commande est relié à chacun des coupleurs 20 de la matrice de commutation. Ce circuit de commande est par exemple un circuit électronique de logique câblée qui présente l'avantage de réagir très rapidement en un temps de l'ordre de 100 à 200 ps (en faisant appel à une technologie à base de GaAs).

En fonction de la tension de commande qui lui est appliquée, un coupleur 20 délivre sur sa sortie soit un faisceau lumineux provenant de l'une de ses entrées, soit un faisceau lumineux provenant de l'autre de ses entrées, soit un mélange de ces faisceaux lumineux.

Un organe de commande E permet, en fonction du nombre de longueurs d'onde sélectionnées, d'assurer une puissance lumineuse constante pour les différents canaux (ou longueurs d'ondes), à la sortie du dispositif.

Dans l'exemple de réalisation représenté, l'organe E commande les générateurs de courant A, B, C, D alimentant respectivement les diodes lasers 10, 12, 14, 16 de façon à obtenir cette puissance lumineuse constante pour les différentes longueurs d'ondes, à la sortie du dispositif.

L'organe E est commandé par le circuit 22 en fonction de la configuration de longueurs d'ondes sélectionnée par ce circuit 22.

Des moyens de modulation 24 sont reliés par une entrée à la sortie de la matrice de commutation 18. On peut utiliser par exemple un modulateur d'intensité ou de phase au LiNbO₃.

Un circuit 26 de traitement de données est connecté aux moyens de modulation 24. Il délivre un signal de commande de modulation en fonction des informations à transmettre.

Les moyens de modulation 24 sont reliés en sortie à une fibre optique 28 de liaison.

La matrice de commutation 18 permet de sélectionner à volonté tout ou partie des porteuses délivrées par les diodes lasers. Les informations à transporter sont délivrées par modulation externe sur toutes les porteuses sélectionnées à la fois.

La grande vitesse de commutation permet une reconfiguration des porteuses multiplexées et autorise une communication "par paquets" dans un réseau optique.

L'adresse (ou les adresses) du (ou des) récepteur(s) est transmise au circuit logique de commande 22 qui sélectionne les porteuses adéquates. Le circuit de traitement des données ordonne en série les informations correspondant aux paquets successifs et applique les signaux de commande adéquats aux moyens de modulation après une temporisation qui permet d'assurer l'établissement du chemin optique entre la (ou les) diode(s) laser(s) sélectionnée(s) et les moyens de modulation.

La matrice de commutation 18 et éventuellement les moyens de modulation 24 peuvent être intégrés sur un même substrat.

Bien entendu, lorsque le nombre de canaux est important, les pertes de puissance lumineuse occasionnées par la matrice de commutation peuvent être compensées par des moyens d'amplification optique convenablement placés.

## Revendications

1. Dispositif de multiplexage en longueur d'onde, ce dispositif comprenant:
- une matrice de commutation (18) à N entrées et une sortie, N étant un nombre entier supérieur ou égal à 2,
- des moyens de modulation (24) reliés à la sortie de la matrice de commutation (18),
- N sources lumineuses (10, 12, 14, 16) aptes à émettre chacune un faisceau lumineux de longueur d'onde particulière sur une entrée de la matrice de commutation,
**ce dispositif étant caractérisé en ce que** ladite matrice comprend plusieurs étages (18a, 18b) successifs de coupleurs optiques commandables (20) reliés entre eux en une structure arborescente, en ce que ledit faisceau lumineux est continu et en ce que le dispositif comprend en outre un circuit de commande (22) relié aux coupleurs (20) et prévu pour commander ceux-ci de façon à sélectionner P longueurs d'ondes parmi les N longueurs d'ondes disponibles, avec 1≤P≤N.

2. Dispositif selon la revendication 1, caractérisé en ce que le circuit de commande (22) est un circuit de logique câblée.

3. Dispositif selon l'une quelconque des revendications 1 et 2, caractérisé en ce qu'il comprend en outre un circuit (26) de traitement de données relié aux moyens de modulation (24) et apte à délivrer un signal de commande de modulation.

4. Dispositif selon l'une quelconque des revendications 1 à 3, caractérisé en ce que les sources sont des sources lasers (10, 12, 14, 16).

5. Dispositif selon l'une quelçonque des revendications 1 à 4, caractérisé en ce qu'il comprend en outre un organe de commande (E) qui est apte à modifier la puissance lumineuse de chaque source lumineuse.

6. Dispositif selon la revendication 5, caractérisé en ce que l'organe (E) est commandé par le circuit de commande (22) de manière à assurer une puissance lumineuse identique pour chaque longueur d'onde sélectionnée, à la sortie du dispositif.

## Patentansprüche

1. Lichtwellenlängen-Multiplexvorrichtung, umfassend:
- eine Schaltmatrix (18) mit N Eingängen und einem Ausgang, wobei N eine ganze Zahl größer oder gleich 2 ist,
- Modulationseinrichtungen (24), verbunden mit dem Ausgang der Schaltmatrix (18),
- N Lichtquellen (10, 12, 14, 16), von denen jede ein Lichtbündel eigener Wellenlänge auf einen Eingang der Schaltmatrix strahlen kann,
wobei diese Vorrichtung **dadurch gekennzeichnet** ist, daß besagte Matrix mehrere aufeinanderfolgende Stufen (18a, 18b) von steuerbaren, durch eine baumartige Struktur miteinander verbundenen optischen Kopplern (20) umfaßt, daß das genannte Lichtbündel kontinuierlich ist und daß die Vorrichtung außerdem eine Steuerschaltung (22) umfaßt, verbunden mit den Kopplern (20) und vorgesehen, diese so zu steuern, daß aus den N verfügbaren Wellenlängen P Wellenlängen ausgewählt werden, mit 1≤P≤N.

2. Vorrichtung nach Anspruch 1, dadurch gekennzeichnet, daß die Steuerschaltung (22) eine verdrahtete bzw. festverdrahtete logische Schaltung ist.

3. Vorrichtung nach einem der Ansprüche 1 und 2, dadurch gekennzeichnet, daß sie außerdem eine Datenverarbeitungsschaltung (26) umfaßt, verbunden mit den Modulationseinrichtungen (24) und fähig, ein Modulationssteuersignal zu liefern.

4. Vorrichtung nach einem der Ansprüche 1 bis 3, dadurch gekennzeichnet, daß die Quellen (10, 12, 14, 16) Laserquellen sind.

5. Vorrichtung nach einem der Ansprüche 1 bis 4, dadurch gekennzeichnet, daß sie außerdem eine Steuereinrichtung (E) umfaßt, die fähig ist, die Lichtstärke jeder Lichtquelle zu modifizieren bzw. zu verändern.

6. Vorrichtung nach Anspruch 5, dadurch gekennzeichnet,daß die Einrichtung (E) durch die Steuerschaltung (22) so gesteuert wird, daß am Ausgang der Vorrichtung für jede ausgewählte Wellenlänge eine identische Lichtstärke gewährleistet ist.

## Claims

1. Wavelength multiplexing device comprising a switching matrix (18) having N inputs and one output, N being an integer equal to or greater than 2, modulating means (24) connected to the output of the switching matrix (18), N light sources (10, 12, 14, 16) each able to emit a continuous light beam having a particular wavelength to an input of the switching matrix, characterized in that said matrix having several successive stages (18a, 18b) of controllable optical couplers (20) interconnected in a tree structure and a control circuit (22) connected to the couplers (20) and provided for controlling the latter so as to select P wavelengths from among N available wavelengths, with 1 ≤ P ≤ N.

2. Device according to claim 1, characterized in that the control circuit (22) is a cabled logic circuit.

3. Device according to either of the claims 1 and 2, characterized in that it also comprises a data processing circuit (26) connected to the modulating means (24) and able to supply a modulation control signal.

4. Device according to any one of the claims 1 to 3, characterized in that the sources are laser sources (10, 12, 14, 16).

5. Device according to any one of the claims 1 to 4, characterized in that it also comprises a control member (E) able to modify the lighting power of each light source.

6. Device according to claim 5, characterized in that the member (E) is controlled by the control circuit (22) so as to ensure an identical lighting power for each selected wavelength at the output of the device.
